# EUROPEAN PATENT APPLICATION

(11) **EP 4 509 956 A1**
(43) Date of publication of application: **19.02.2025**
(21) Application number: 24184390.3
(22) Date of filing: 25.06.2024
(51) Int. Cl.: G06F 1/30, G06F 1/3296, G06F 1/324

(54) **SYSTEM, METHOD AND APPARATUS FOR REACTIVE POWER CONTROL IN A PROCESSOR**

(30) Priority: 15.08.2023 US 202363519628 P; 26.09.2023 US 202318474385
(71) Applicant: INTEL Corporation, Santa Clara, CA 95054 (US)
(72) Inventor: WIJERATNE, Sapumal, Portland, OR, 97229 (US); GUNTHER, Stephen H., Beaverton, OR, 97007 (US); BARRIENTOS BARRIENTOS, Rene, Hillsboro, OR, 97124 (US); ALBERTS, Joseph, Aloha, OR, 97006 (US); AGARWAL, Preeti, Portland, OR, 97229 (US); NGE, Chee Lim, Beaverton, OR, 97006 (US); RODRIGUEZ, Jorge, Portland, OR, 97205 (US)
(74) Representative: Samson & Partner Patentanwälte mbB

(57) **Abstract**

In one example, an apparatus comprises a first intellectual property (IP) circuit to execute operations on data and a power controller. The power controller is to: receive a boost value that is based at least in part on one or more characteristics of a power supply; determine a boosted maximum power level based at least in part on the boost value and a legacy maximum power level; and provide a boosted maximum power budget for the first IP circuit based at least in part on the boosted maximum power level. The first IP circuit, in response to an input voltage violation signal, is to reactively reduce power consumption equal to or below a legacy maximum power budget for the first IP circuit lower than the boosted maximum power budget. Other embodiments are described and claimed.

## Description

### Cross-Reference To Related Application

This application claims the benefit of United States Provisional Application No. 63/519,628, filed on August 15, 2023, and entitled "SYSTEM, METHOD AND APPARATUS FOR REACTIVE POWER CONTROL IN A PROCESSOR."

### Background

In computing systems, a primary power source has a limited peak power delivery capability. Whether the primary power source is an AC power supply or battery, exceeding the power output capability may result in the output voltage drooping, which can cause system failure. And battery-powered systems have an output power capability that may vary as a function of the charge level of the battery, since as battery charge level drops, peak power delivery capability also drops. The peak output power capability is also a function of the battery configuration.

In existing platforms, these peak power delivery constraints can directly impact performance capability. Because peak power delivery capability violations can lead to system failure in a few 10's of microseconds (µs) or faster, these constraints are managed proactively, which means the system is designed and operated to prevent power consumption from ever exceeding the power delivery limit. Historically, a peak power delivery constraint has been managed by limiting maximum frequencies of high power-consuming circuitry within a processor to guarantee that peak power consumption stays below platform peak power delivery capability. The nature of a proactive, predictively managed constraint is that it is conservative, meaning that performance is constrained prior to reaching the physical limits of the platform.

### Brief Description Of The Drawings

FIG. 1 is a block diagram of a computing system in accordance with an embodiment.
FIG. 2 is a block diagram of a system on chip in accordance with an embodiment.
FIG. 3 is a flow diagram of a method in accordance with an embodiment.
FIG. 4 is a graphical illustration of a relationship between allowable response time and available boost credit.
FIG. 5 illustrates an example computing system.
FIG. 6 illustrates a block diagram of an example processor in accordance with an embodiment.

### Detailed Description

In various embodiments, a processor is configured to provide higher performance capability for a given peak power delivery capability. This arrangement is realized by a protection mechanism that allows peak power delivery capability to be managed reactively, rather than proactively. Effectively, this means that performance is only constrained when instantaneous power consumption reaches a peak power delivery limit, rather than reducing operating frequency limits proactively. In embodiments, this reactive power control occurs based at least in part on detection of power consumption at a threshold, combined with the ability of individual high power-consuming circuits to reduce power consumption back below that threshold nearly instantaneously, e.g., within a few microseconds.

With embodiments, a programmable boost increase may be added to an existing (legacy) maximum power delivery capability of a given system. As a result, at least some circuitry may be allowed to operate at higher power consumption levels. This is so, since such circuitry may be provided with control circuitry to ensure any boosted power consumption drops below a legacy power consumption nearly instantaneously (e.g., within approximately 1-10µs) of being signaled that power consumption is to be reduced.

With this arrangement, certain high power-consuming circuitry can operate at operating frequencies above a limit defined by the peak power delivery capability of the power supply network, hence delivering higher performance without violating power delivery requirements. The result is an increase in the maximum possible power consumed by the load, and hence better performance.

Embodiments may realize this reduction by immediately forcing at least some (or all) high load IP circuits to undergo power throttling, which substantially reduces IP power consumption. While different techniques are possible, in some cases, circuits can throttle power consumption by immediately reducing clock frequency of the IP circuit. Another approach is to invoke a micro-architectural mechanism to immediately constrain the throughput of the IP circuit, for example by reducing the number of instructions that a core can execute or retire in any given clock cycle. Yet other approaches may include clock duty cycling, for example, by chopping out clock edges, or performing another technique to reduce power consumption.

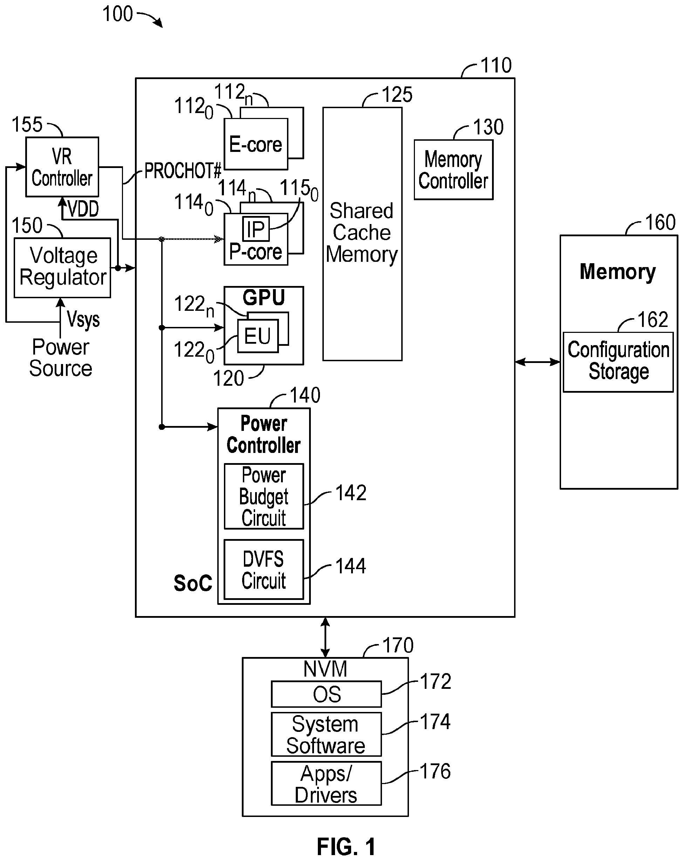

Referring now to FIG. 1, shown is a block diagram of a platform in accordance with an embodiment. As shown in FIG. 1, computing platform 100 may be any type of computing device, ranging from a relatively small device such as a smartphone to larger devices, including laptop computers, desktop computers, server computers or so forth. In the high level shown in FIG. 1, platform 100 includes a processor that is implemented as an SoC 110, although other processor implementations are possible. As shown, processor SoC 110 couples to a memory 160 which is a system memory (e.g., a dynamic random access memory (DRAM)), and a non-volatile memory 170 which in different embodiments can be implemented as a flash memory, disk drive or so forth. Understand that the terms "system on chip" or "SoC" are to be broadly construed to mean an integrated circuit having one or more semiconductor dies implemented in a package, whether a single die, a plurality of dies on a common substrate, or a plurality of dies at least some of which are in stacked relation. Thus as used herein, such SoCs are contemplated to include separate chiplets, dielets, and/or tiles, and the terms "system in package" and "SiP" are interchangeable with system on chip and SoC.

With respect to SoC 110, included are a plurality of cores. In the particular embodiment shown, two different core types are present, namely first cores 112₀-112ₙ (so-called efficiency cores (E-cores)) and second cores 114₀₋ₙ (so-called performance cores (P-cores)). Understand that the various cores may include many different types of execution units, intellectual property (IP) circuits (one of which is illustrated as IP circuit 115₀ within P-core 114₀), and other circuitry. Although only a single IP circuit is shown, understand that SoC 110 may include many different IP circuits, present in one or more of cores 112, 113 GPU 120, and/or present as standalone processing circuits. As further shown, SoC 110 includes a graphics processing unit (GPU) 120 including a plurality of execution units (EUs) 122₀₋ₙ. In one or more embodiments, first cores 112 and second cores 114 and/or GPU 120 may be implemented on separate dies.

These various computing elements couple to additional components of SoC 110, including a shared cache memory 125, which in an embodiment may be a last level cache (LLC) having a distributed architecture. In addition, a memory controller 130 is present along with a power controller 140, which may be implemented as a hardware control circuit that may be a dedicated microcontroller to execute instructions, e.g., stored on a non-transitory storage medium (e.g., firmware instructions). In other cases, power controller 140 may have different portions that are distributed across one or more of the available cores.

Still with reference to FIG. 1, power controller 140 includes various constituent circuitry. Power controller 140 includes a power budget circuit 142. In embodiments, power budget circuit 142 is configured to receive a boost value and determine boosted power budgets for various high power-consuming IP circuits within SoC 110. Such IP circuits may include cores, graphics processing units, vector processing engines, memory subsystems, cache memories, and fabrics (and/or any portions of any of these), among other high power-consuming IP circuits. Power budget circuit 142 may send these boosted power budgets to the IP circuits so that they may operate within such greater power consumption levels.

Power controller 140 further includes a dynamic voltage and frequency scaling (DVFS) circuit 144. DVFS circuit 144 may be configured to dynamically adjust voltage and/or frequency of cores 112, 114, and/or GPU 120, depending upon environmental conditions including temperature, power budget and so forth. Note that DVFS circuit 144 may perform such power management operations at a slower frequency (e.g., approximately within a millisecond responsiveness) than the instantaneous (within approximately 1-10 µs) power throttling that individual IP circuits may perform independently and autonomously, responsive to receipt of an input voltage violation signal.

As further shown in FIG. 1, SoC 110 is powered by an operating voltage received from a voltage regulator 150. Voltage regulator 150 in turn receives power from a power source, e.g., AC wall power or battery power. Voltage regulator 150, which is an external voltage regulator, e.g., as adapted to a motherboard of platform 100, is controlled by a way of a voltage regulator controller 155. As seen, voltage regulator 150 receives a system voltage (Vsys) from the power source, and outputs a regulated output voltage VDD, under control of voltage regulator controller 155. Although shown as separate components, in some implementations voltage regulator 150 may include voltage regulator controller 155 such as may be implemented as a power management integrated circuit (PMIC).

Voltage regulator controller 155 monitors the system voltage, e.g., via an included voltage comparator that compares the system voltage to a reference voltage, e.g., a so-called critical threshold (Vsys Critical). When this system voltage falls below the predetermined reference voltage, e.g., due to a loss of battery charge, problem with AC power or so forth, voltage regulator controller 155 issues an input voltage violation signal. As illustrated in FIG. 1, this input voltage violation signal is referred to herein as PROCHOT#, which is sent directly to various entities within SoC 100. Receipt of this signal informs the entities regarding the drop in the system voltage, which may in turn cause a voltage droop that could lead to a system failure, without correct and instantaneous management. Of course, other signals may be used to indicate the input voltage violation.

As shown, this input voltage violation signal is sent directly to power controller 140. Voltage regulator controller 155 is configured to also direct this input voltage violation signal directly to certain high power-consuming IP circuits. As shown for illustration example, these IP circuits may be cores 114 (and/or individual IP circuits therein). This signal may also be directly routed to other high power-consuming circuits within SoC 110 such as coprocessors, accelerators and so forth that may be present (not shown for ease of illustration in the high level view of FIG. 1).

Thus a hardwired approach is used to provide hardwired paths to directly and instantaneously inform particular IP circuits regarding the input voltage violation. Responsive to this receipt, these IP circuits are configured to independently and autonomously take appropriate power throttling operations to instantaneously bring their power consumption level to a legacy maximum power level or lower, to avoid the system failure, as described further herein.

In embodiments, power controller 140 guarantees that the legacy maximum power capability plus the additional boost value is not exceeded at any time. Power controller 140 further guarantees that if a boost credit is applied, when the reaction mechanism (PROCHOT#) is invoked, peak power drops to a value less than (or equal to) the legacy maximum power capability within a few microseconds. This is so, as violating this requirement can lead to system failure.

To this end, power controller 140 may thus identify only those IP circuits capable of meeting these guarantees in allocating boosted power budgets. In addition, since during system operation, there is a delay in detecting an undervoltage condition and reacting to it, this detection and reaction delay is accounted for when determining the allowable boost value.

As illustrated, NVM 170 may store an operating system (OS) 172, additional system software 174 (which may include a basic input/output system (BIOS) and other firmware), and various applications, drivers and other software (generally identified at 176). In one or more embodiments, system software 174 may be configured to calculate a boost value, based at least in part on certain power supply characteristics. This determined boost value may be stored in a configuration storage 162, so that it may be accessed for use in determining a boosted maximum power level for SoC 110. In an embodiment, this boosted maximum power level may be equal to a sum of the boost value and a legacy maximum power level.

Understand while shown at this high level in the embodiment of FIG. 1, many variations and alternatives are possible, and other implementations of SoC 110 can equally incorporate embodiments. For example depending on market segment, an SoC can include, instead of a hybrid product having heterogeneous core types, only cores of a single type. Further, more or different accelerator types may be present. For example, in addition to or instead of GPUs, an SoC may include a direct streaming accelerator (DSA), field programmable gate array (FPGA) or other accelerator.

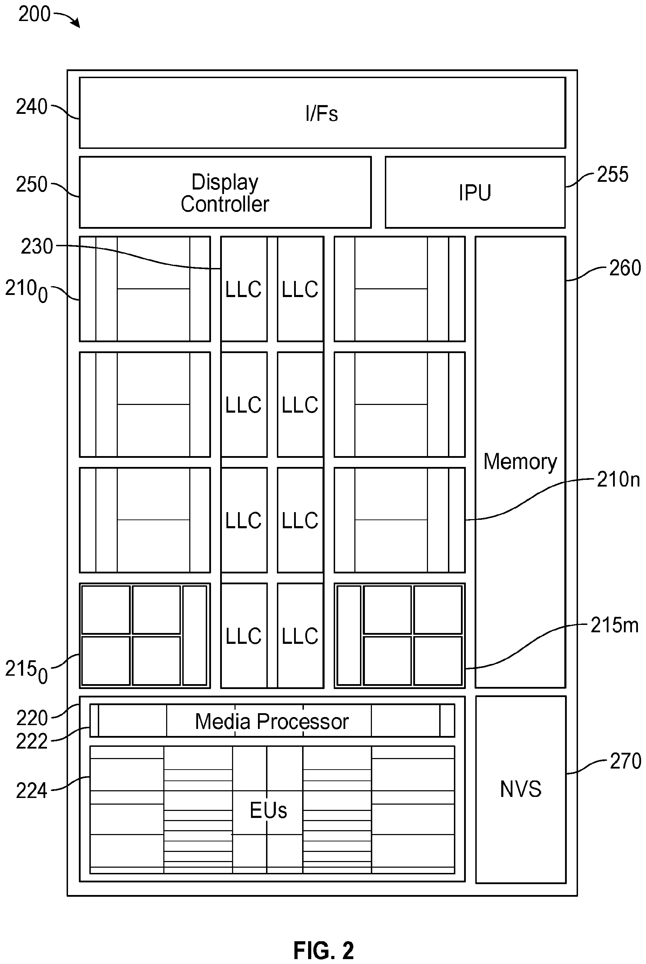

Referring now to FIG. 2, shown is a block diagram of an SoC in accordance with another embodiment. More specifically as shown in FIG. 2, SoC 200 is a multicore processor, including a first plurality of cores 210₀₋ₙ and a second plurality of cores 215₀₋ₘ. In one or more embodiments, first cores 210 may be implemented as performance cores, in that they may include greater amounts of circuitry (e.g., more IP circuits and/or wider and deeper pipelines) to perform more advanced computations in a performant manner. In contrast, second cores 215 may be configured as smaller cores that consume less power and may perform computations in a more efficient manner (e.g., with respect to power) than first cores 210. In certain implementations, first cores 210 may be referred to as P-cores (for performance cores) and second cores 215 may be referred to as E-cores (for efficiency cores). Note that different numbers of first and second cores may be present in different implementations.

As further illustrated in FIG. 2, a cache memory 230 may be implemented as a shared cache arranged in a distributed manner. In one or more embodiments, cache memory 230 may be a LLC having a distributed implementation in which one or more banks are associated with each of the cores.

As further illustrated, a GPU 220 may include a media processor 222 and a plurality of EUs 224. Graphics processor 220 may be configured for efficiently performing graphics or other operations that can be broken apart for execution on parallel processing units such as EUs 224.

Still referring to FIG. 2, various interface circuitry 240 is present to enable interface to other components of a system. Although embodiments are not limited in this regard, such interface circuitry may include a Peripheral Component Interconnect Express (PCIe) interface, one or more Thunderbolt^{™} interfaces, an Intel^{®} Gaussian and Neural Accelerator (GNA) coprocessor and so forth. As further illustrated, processor 200 includes a display controller 250 and an image processing unit (IPU) 255.

As further shown, SoC 200 also includes a memory 260 that may provide memory controller functionality for interfacing with a system memory such as DRAM. Understand while shown at this high level in the embodiment of FIG. 2, many variations and alternatives are possible. Note that in this implementation, power controller circuitry such as power controller 140 of FIG. 1 is not separately shown. Depending upon implementation such components may be separate circuits present within SoC 200 or this functionality may be performed by one or more of first and/or second cores or other processing unit.

With embodiments herein, SoC 200 may be configured to operate at a boosted maximum power level as described herein. And then in response to an input voltage violation signal, particular IP circuits autonomously perform power throttling to instantaneously reduce power consumption to be within legacy levels, to avoid a system failure.

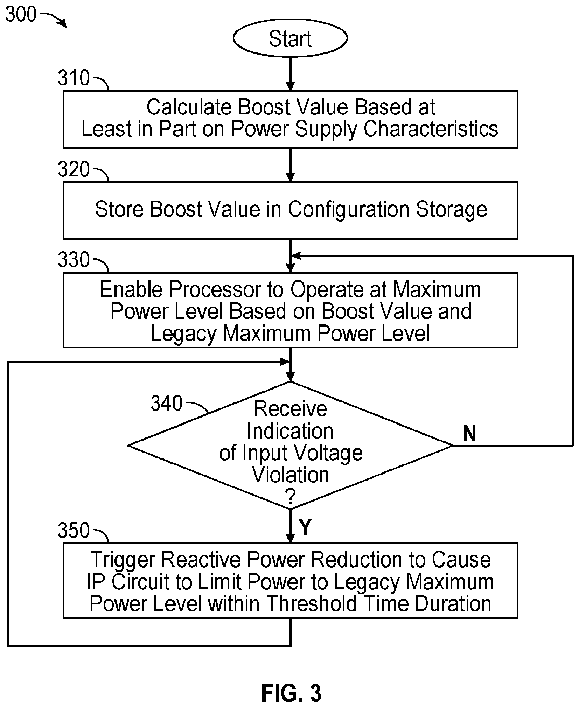

Referring now to FIG. 3, shown is a flow diagram of a method in accordance with an embodiment. More specifically, method 300 is performed within a platform including an SoC or other processor that can directly receive an input voltage violation indication and reactively reduce power consumption in response to the indication. Method 300 details operations involved in configuring the processor to enable operation at power consumption levels greater than a legacy maximum power level and reactively respond to input voltage violations. As such, method 300 can be performed using hardware circuitry within the processor, including a power controller and IP-internal circuitry, alone and/or in combination with firmware and/or software.

As shown in FIG. 3, method 300 begins by calculating a boost value based at least in part on power supply characteristics (block 310). System software such as firmware, BIOS or so forth, may calculate this boost value based on these characteristics. In an embodiment, the boost value is calculated by taking into account factors that affect the input voltage received by an external voltage regulator, including but not limited to one or more of: impedance between the power supply and the voltage regulator input, total capacitance on the power supply output voltage, charge level of the battery, etc. This boost value can be calculated statically and can also be adjusted at run time, for example as a function of battery charge level. For legacy functionality, the boost value can be programmed to a value of zero.

Next at block 320, the boost value may be stored in a configuration storage. As an example, the boost value can be stored within a system memory and may also be stored in a power controller (e.g., within a configuration register). Using this boost value, the power controller may determine power budgets for given IP circuits. Note that the operations at blocks 310 and 320 may be used to configure a processor to be used in a given platform, based on characteristics of the power supply. Of course, in many implementations these operations may also occur dynamically as changes occur to a power source, particularly in situations in which the power source is a battery, as a function of battery charge level.

Thus the power controller receives this boost value that is based at least in part on one or more characteristics of a voltage regulator. Based at least in part on this boost value and a legacy maximum power level for the processor, the power controller determines a boosted maximum power level for the processor, and also determines a boosted maximum power budget for one or more IP circuits based at least in part on the boosted maximum power level

Still referring to FIG. 3, next at block 330, the processor is enabled to operate at a maximum power level that is based on this boost value and a legacy maximum power level. In an embodiment, the power controller may be configured to determine this boosted maximum power level as a sum of the boost value and the legacy maximum power level. Still further at block 330 the power controller may be configured to determine boosted power budgets for various IP circuits that are to execute high power-consuming instructions. In turn the power controller sends these boosted power budgets to the IP circuits. Understand that in some implementations, these IP circuits also may be informed of a legacy power budget, which they may need to fall back to when an input voltage violation is incurred.

Note that these IP circuits are configured to control their own power consumption to remain within the boosted power budget (or, when an input voltage violation is identified, the lower legacy power budget). At this point the processor may enter into normal operation, where these high power-consuming IP circuits and other IP circuits within cores and other components execute instructions.

Still referring to FIG. 3, control passes to diamond 340 where it is determined whether an indication of an input voltage violation is received. This indication may be received as a setting of a PROCHOT# signal, which directly informs particular IP circuits along with the power controller of this input voltage violation. In response to this indication, control passes to block 350, where a reactive power reduction is triggered. Understand that this power throttling may be performed independently and autonomously within the IP circuits that directly receive the PROCHOT# signal. This reactive power throttling causes these IP circuits to lower their power consumption to be within the legacy power budget. Understand that this throttling of power consumption may occur nearly instantaneously, e.g., within approximately 1-10 microseconds (which may be a threshold time duration), to ensure that a system failure does not occur.

Such operation at throttled power levels may proceed until the PROCHOT# signal is no longer asserted (as determined with control passing back to diamond 340). Although shown at this high level in the embodiment of FIG. 3, many variations and alternatives are possible.

With the arrangement in FIG. 3, at least one IP circuit can directly receive an indication that the input voltage to the power supply (as may be sent by a voltage regulator controller coupled to a power supply implemented as a voltage regulator) has fallen below a threshold level. In response to this indication, the at least one IP circuit may autonomously reduce its power consumption to a level at or below the legacy power budget, to avoid a catastrophic event.

Embodiments thus enable a load to allow operating points up to the legacy plus additional boost instantaneous power consumption, providing higher performance capability without having to increase the size or cost of the power supply and/or battery.

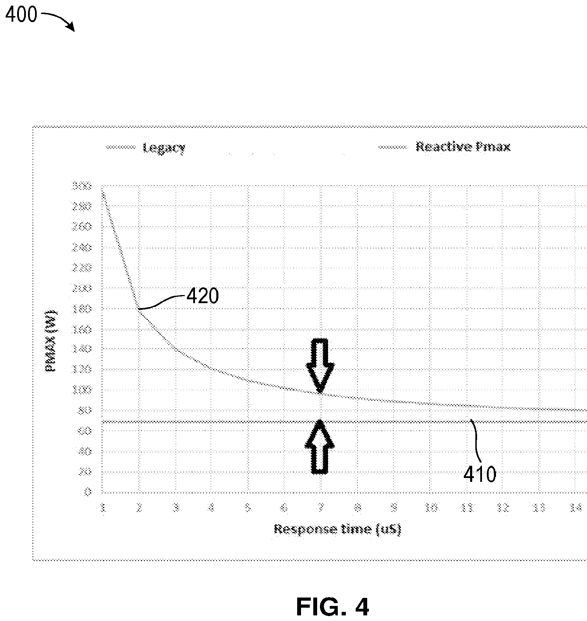

Referring now to FIG. 4, shown is a graphical illustration of a relationship between allowable response time and available boost credit. Illustration 400 shows a legacy maximum power level 410 and a boosted maximum power level 420 in accordance with an embodiment. Legacy level 410 is static and set conservatively to ensure that even if all high power-consuming circuits are executing a power virus, a peak power constraint is not violated. Boosted level 420 allows higher power consumption. Then, should an input voltage or other event occur (e.g., at time 1), nearly instantaneous reduction in power consumption occurs to ensure that operation avoids a system failure. In an embodiment, a boost credit is a function of how quickly an exceedance can be detected, communicated, and acted upon (which may include consideration of the power delivery network and response capability of the IP circuits, which may shift depending on operating frequency).

Note that the gap between levels 410 and 420, shown with arrows in FIG. 4 illustrates a credit or boost enabled by embodiments. In an example, the response time may include time consumed by a voltage regulator controller to trigger a reaction (e.g., 3-4 µs) and SoC circuitry may incur additional time (e.g., 3-4 µs) to drive the power down to legacy level 410.

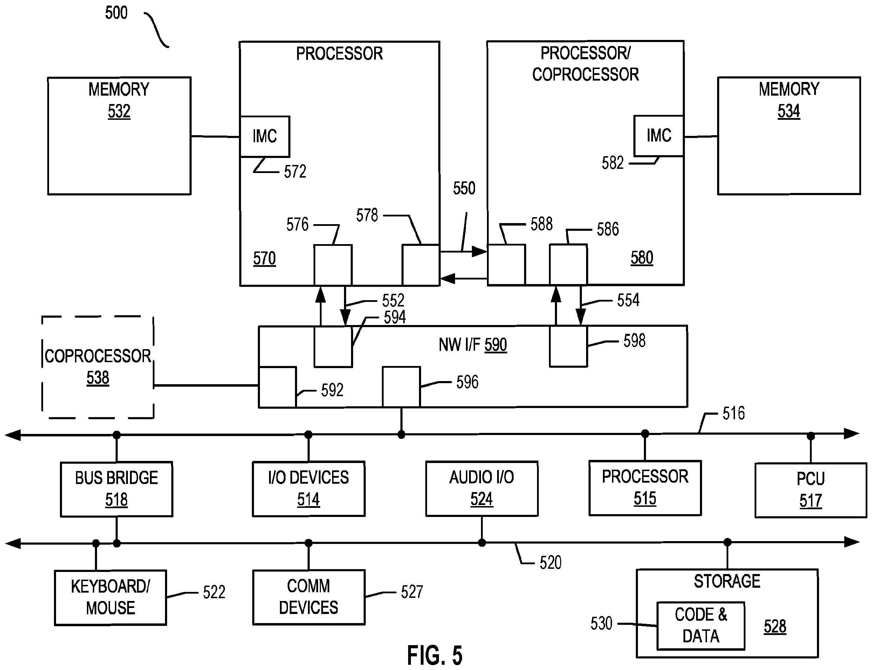

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is a SoC.

Processors 570 and 580 are shown including integrated memory controller (IMC) circuitry 572 and 582, respectively. Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software. PCU 517 may be configured to determine a boosted maximum power level based at least in part on a boost value that in turn is based on characteristics of a power supply configuration of system 500, as described herein. PCU 517 may, based at least in part on the boosted maximum power level, determine boosted power budgets for individual IP circuits, as described herein.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

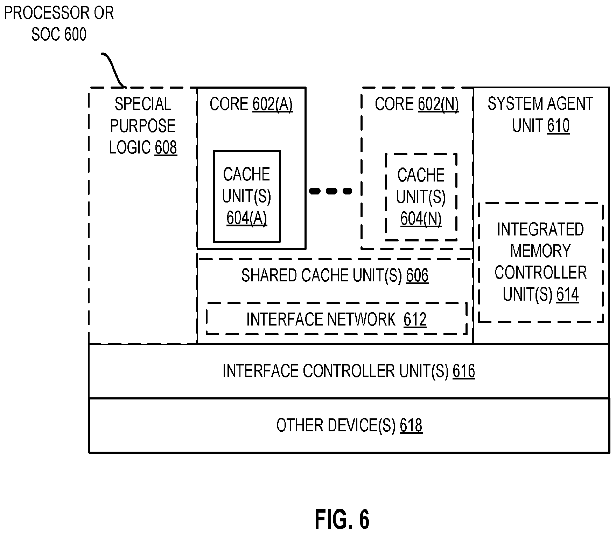

FIG. 6 illustrates a block diagram of an example processor and/or SoC 600 that may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 in the system agent unit circuitry 610, and special purpose logic 608, as well as a set of one or more interface controller units circuitry 616. Note that the processor 600 may be one of the processors 570 or 580, or coprocessor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller units circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic), including determining and communicating boosted maximum power budgets to various IP circuits, as described herein. The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

The following examples pertain to further embodiments.

In one example, an apparatus comprises: a first IP circuit to execute operations on data; and a power controller coupled to the first IP circuit. The power controller is to: receive a boost value, the boost value based at least in part on one or more characteristics of a power supply coupled to the apparatus; determine a boosted maximum power level for the apparatus based at least in part on the boost value and a legacy maximum power level for the apparatus, the boosted maximum power level greater than the legacy maximum power level; and provide a boosted maximum power budget for the first IP circuit based at least in part on the boosted maximum power level, the boosted maximum power budget for the first IP circuit greater than a legacy maximum power budget for the first IP circuit. The first IP circuit, in response to receipt of an input voltage violation signal, is to reactively reduce power consumption equal to or below the legacy maximum power budget for the first IP circuit.

In an example, the first IP circuit is to receive the input voltage violation signal directly from a controller coupled to the power supply.

In an example, the apparatus further comprises a hardwire path coupled to the first IP circuit to provide the input voltage violation signal directly from the controller to the first IP circuit.

In an example, the power controller is to receive the boost value from a system software.

In an example, the apparatus further comprises a configuration storage to store the boost value.

In an example, the power controller is to access the boost value from the configuration storage, and determine the boosted maximum power level comprising a sum of the boost value and the legacy maximum power level.

In an example, the first IP circuit, within less than 10 microseconds from receipt of the input voltage violation signal, is to reactively reduce the power consumption equal to or below the legacy maximum power budget for the first IP circuit.

In an example, the apparatus further comprises at least one storage to store the boosted maximum power budget for the first IP circuit and the legacy maximum power budget for the first IP circuit.

In an example, the first IP circuit is to autonomously reactively reduce the power consumption equal to or below the legacy maximum power budget for the first IP circuit, in response to receipt of the input voltage violation signal.

In an example, the apparatus further comprises a second IP circuit to execute operations on second data, where the power controller is to provide a second legacy maximum power budget for the second IP circuit, the second IP circuit to not exceed the second legacy maximum power budget.

In another example, a method comprises: receiving, in at least one IP circuit of a SoC, an indication that an input voltage to a voltage regulator coupled to the SoC has fallen below a threshold level; and in response to the indication, autonomously, in the at least one IP circuit, reducing power consumption of the at least one IP circuit to a level below a legacy maximum IP power budget, the legacy maximum IP power budget set by a power controller of the SoC.

In an example, the method further comprises receiving the indication in the at least one IP circuit via a hardwire connection to a voltage regulator controller coupled to the SoC.

In an example, the method further comprises reducing the power consumption of the at least one IP circuit to the level below the legacy maximum IP power budget within 10 microseconds from receipt of the indication.

In an example, the method further comprises: determining, in the power controller, a boosted maximum power budget for the SoC based at least in part on a boost value and a legacy maximum power budget for the SoC, the boost value based on the voltage regulator, the boosted maximum power budget greater than the legacy maximum power budget; determining a boosted maximum IP power budget for the at least one IP circuit based at least in part on the boosted maximum power budget; and sending the boosted maximum IP power budget to the at least one IP circuit.

In an example, the method further comprises: operating the at least one IP circuit with the power consumption greater than the legacy maximum IP power budget based on the boosted maximum IP power budget; receiving the indication in the at least one IP circuit; and thereafter operating the at least one IP circuit with the power consumption less than the legacy maximum IP power budget.

In an example, the method further comprises maintaining a power consumption of a second IP circuit at a level below a legacy maximum second IP power budget, the legacy maximum second IP power budget set by the power controller.

In another example, a computer readable medium including instructions is to perform the method of any of the above examples.

In a further example, a computer readable medium including data is to be used by at least one machine to fabricate at least one integrated circuit to perform the method of any one of the above examples.

In a still further example, an apparatus comprises means for performing the method of any one of the above examples.

In still another example, a system comprises: a voltage regulator to receive a system voltage and output an operating voltage; a voltage regulator controller to identify when the system voltage falls below a threshold voltage; a SoC coupled to the voltage regulator, and a non-volatile memory coupled to the SoC. The SoC to receive the operating voltage and comprises: at least one first IP circuit to execute operations on first data; and at least one second IP circuit to execute operations on second data. The SoC also includes a power controller to: receive a boost value, the boost value based at least in part on one or more characteristics of the voltage regulator; determine a boosted maximum power level for the SoC based at least in part on the boost value and a legacy maximum power level for the SoC, the boosted maximum power level greater than the legacy maximum power level; and determine a boosted maximum power budget for the at least one first IP circuit based at least in part on the boosted maximum power level, the boosted maximum power budget for the at least one first IP circuit greater than a legacy maximum power budget for the at least one first IP circuit. The at least one first IP circuit is to reduce power consumption equal to or below the legacy maximum power budget for the at least one the first IP circuit, in reaction to the input voltage falling below the threshold voltage.

In an example, the voltage regulator controller is to send a voltage violation signal to the SoC when the system voltage falls below the threshold voltage.

In an example, the system further comprises a hardwire path coupled between the voltage regulator controller and the at least one first IP circuit, the voltage regulator controller to send the voltage violation signal to the at least one first IP circuit via the hardwire path.

In an example, the at least one first IP circuit is to autonomously reduce the power consumption equal to or below the legacy maximum power budget for the at least one first IP circuit based on the voltage violation signal.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SOC or other processor, is to configure the SOC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. An apparatus comprising:
a first intellectual property (IP) circuit to execute operations on data; and
a power controller coupled to the first IP circuit, wherein the power controller is to:
receive a boost value, the boost value based at least in part on one or more characteristics of a power supply coupled to the apparatus;
determine a boosted maximum power level for the apparatus based at least in part on the boost value and a legacy maximum power level for the apparatus, the boosted maximum power level greater than the legacy maximum power level; and
provide a boosted maximum power budget for the first IP circuit based at least in part on the boosted maximum power level, the boosted maximum power budget for the first IP circuit greater than a legacy maximum power budget for the first IP circuit,
wherein the first IP circuit, in response to receipt of an input voltage violation signal, is to reactively reduce power consumption equal to or below the legacy maximum power budget for the first IP circuit.

2. The apparatus of claim 1, wherein the first IP circuit is to receive the input voltage violation signal directly from a controller coupled to the power supply.

3. The apparatus of claim 2, further comprising a hardwire path coupled to the first IP circuit to provide the input voltage violation signal directly from the controller to the first IP circuit.

4. The apparatus of claim 1, further comprising a configuration storage to store the boost value.

5. The apparatus of claim 4, wherein the power controller is to access the boost value from the configuration storage, and determine the boosted maximum power level comprising a sum of the boost value and the legacy maximum power level.

6. The apparatus of claim 1, wherein the first IP circuit, within less than 10 microseconds from receipt of the input voltage violation signal, is to reactively reduce the power consumption equal to or below the legacy maximum power budget for the first IP circuit.

7. The apparatus of claim 6, further comprising at least one storage to store the boosted maximum power budget for the first IP circuit and the legacy maximum power budget for the first IP circuit.

8. The apparatus of claim 7, wherein the first IP circuit is to autonomously reactively reduce the power consumption equal to or below the legacy maximum power budget for the first IP circuit, in response to receipt of the input voltage violation signal.

9. A method comprising:
receiving, in at least one intellectual property (IP) circuit of a system on chip (SoC), an indication that an input voltage to a voltage regulator coupled to the SoC has fallen below a threshold level; and
in response to the indication, autonomously, in the at least one IP circuit, reducing power consumption of the at least one IP circuit to a level below a legacy maximum IP power budget, the legacy maximum IP power budget set by a power controller of the SoC.

10. The method of claim 9, further comprising receiving the indication in the at least one IP circuit via a hardwire connection to a voltage regulator controller coupled to the SoC.

11. The method of claim 9, further comprising reducing the power consumption of the at least one IP circuit to the level below the legacy maximum IP power budget within 10 microseconds from receipt of the indication.

12. The method of claim 9, further comprising:
determining, in the power controller, a boosted maximum power budget for the SoC based at least in part on a boost value and a legacy maximum power budget for the SoC, the boost value based on the voltage regulator, the boosted maximum power budget greater than the legacy maximum power budget;
determining a boosted maximum IP power budget for the at least one IP circuit based at least in part on the boosted maximum power budget; and
sending the boosted maximum IP power budget to the at least one IP circuit.

13. The method of claim 12, further comprising:
operating the at least one IP circuit with the power consumption greater than the legacy maximum IP power budget based on the boosted maximum IP power budget;
receiving the indication in the at least one IP circuit; and
thereafter operating the at least one IP circuit with the power consumption less than the legacy maximum IP power budget.

14. At least one computer readable storage medium having stored thereon instructions, which if performed by a machine cause the machine to perform the method of any one of claims 9 to 13.

15. An apparatus comprising means to perform a method as claimed in any one of claims 9 to 13.
